# EUROPEAN PATENT SPECIFICATION

(11) **EP 4 442 878 B1**
(45) Date of publication and mention of the grant of the patent: **11.02.2026**
(21) Application number: 24169055.1
(22) Date of filing: 08.04.2024
(51) Int. Cl.: D04B 1/14, A41D 31/102, A41D 31/12, B32B 5/02, D03D 11/02, D03D 15/208, D03D 15/283, D04B 1/18, D04B 21/14, D04B 21/18, D02G 3/36, D06P 1/22

(54) **FABRIC WITH MOISTURE MANAGEMENT FUNCTION**
STOFF MIT FEUCHTIGKEITSMANAGEMENTFUNKTION
TISSU AVEC FONCTION DE GESTION DE L'HUMIDITÉ

(30) Priority: 07.04.2023 US 202318297413
(43) Date of publication of application: 09.10.2024
(73) Proprietor: Lululemon Athletica Canada Inc., Vancouver BC V6J 1C7 (CA)
(72) Inventor: DANDAPURE, Yogendra V., Vancouver, V6J 1C7 (CA); MANNA, Rovin, Vancouver, V6J 1C7 (CA)
(74) Representative: Boult Wade Tennant LLP

(56) References cited:
- WO-A1-2022/133606
- CN-A- 106 192 177
- CN-A- 109 322 050
- CN-A- 112 695 394
- US-A- 4 530 873

## Description

### TECHNICAL FIELD

It is provided a knitted and a woven fabric with moisture management function comprising a hydrophilic gradient.

### BACKGROUND

Fabrics used in apparel designed for athletic activities are conceived with the objective of maximizing the body performance by notably controlling the body temperature and keeping the moisture away from the individual in order to reduce the quantity of perspiration that accumulates adjacent to the skin, which causes discomfort with wet cling and increases friction with skin causing chafing The challenge is to manufacture such apparel which generally exhibit characteristics that enhance the performance without compromising the appearance and/or comfort of an individual.

The nature of the textiles that are incorporated into an apparel are generally selected based upon the targeted property for which the apparel is conceived, such as for example wind resistance, reduction of perspiration that accumulates adjacent to the skin, and enhancing comfort of individuals engaged in specific athletic activities.

Textiles normally incorporated in such fabrics may be cotton, wool, silk, synthetic materials such as rayon, nylon, polyester, and polyacrylic for example.

There is always a challenge to provide athletes when competing or training, with improved apparel which will allow to cope with heat/cold from the external environment, but also with heat generated within the body of the athlete as a result of physical exertion and associated sweat and lack of heat dissipation.

US Patent Publication no. US 4,530,873 discloses an absorbent textile fabric suitable as a material for sportwear. The fabric comprises a water absorbent fabric layer having a high moisture absorbency and a water permeable fabric layer having a low moisture absorbency and a high moisture permeability. These fabric layers may be integrally connected, such as by knitting or by the use of a bonding agent, to provide a double-layered fabric structure.

Chinese Patent Publication no. CN 106 192 177 discloses a one-way moisture guiding and absorbing knitted fabric. The fabric is knitted from a first yarn, a second yarn and a third yarn. The first yarn is a covering yarn, the second yarn is a polyurethane elastic fiber yarn or a polyolefin elastic fiber yarn, and the third yarn is a cotton fiber blended yarn or all cotton yarn. The fabric is of a three-layer structure composed of an outer layer, a middle layer and an inner layer, the outer layer is knitted from the first yarn, the middle layer is knitted from the second yarn, and the inner layer is knitted from the third yarn.

Chinese Patent Publication no. CN 109 322 050 discloses a multifunctional vortex spinning fabric. The vortex spinning fabric comprises a fabric body having a double-sided mesh texture structure. This is formed by a first yarn threaded on knitted odd paths of the fabric body, a second yarn threaded on even paths, and an alignment mode of triangular synchronous looping on the upper and lower sides. The first yarn is a core-spun yarn structure and adopts a polypropylene fiber as a core fiber and Tencel fibers as wrapping fibers. The second yarn is of a core-spun yarn structure and adopts a DTY polyester network yarn as a core yarn fiber and long-staple cotton fiber as a wrapping fiber.

International Patent Publication no. WO 2022/133606 discloses a knitted or woven fabric with a moisture management function. A first fabric layer has a first yarn and a second yarn knitted together, the first fabric layer being semi-hydrophilic or hydrophobic (comprising fibers of lower moisture regain). A second fabric layer comprises a third yarn and a fourth yarn knitted together, the second fabric layer being fully hydrophilic (comprising fibers of higher moisture regain). The first fabric layer has a moisture regain lower than the moisture regain of the second fabric layer, providing a hydrophilic gradient between the first fabric layer and the second fabric layer of the knitted fabric which acts to push moisture through the first fabric layer (which is worn in contact with the wearer's skin) and out through the second fabric layer.

Chinese Patent Publication no. CN 112 695 394 describes a moisture-absorbing and sweat-releasing yarn and fabric. The moisture-absorbing and sweat-releasing yarn is provided with a multilayer structure formed by composite melt spinning or composite spinning. An outer layer (being exposed to the environment) of the multilayer structure has superior hydrophilicity than compared to an inner layer of the multilayer structure. The fineness of the fiber of the outer layer is smaller than that of the fiber of the inner layer. The outer layer fiber has a circular cross section, and the inner layer fiber has a special-shaped cross section.

It is thus highly desired to be provided with improved fabrics.

### SUMMARY

It is provided a knitted or woven fabric with moisture management function comprising a first fabric layer comprising a first yarn to form the first layer being semi-hydrophilic with lower moisture regain and a second fabric layer comprising a second yarn, the second fabric layer being hydrophilic with higher moisture regain, wherein the first fabric layer has a moisture regain lower than the moisture regain of the second fabric layer providing a hydrophilic gradient between the first fabric layer and the second fabric layer of the knitted / or woven fabric pulling moisture through the first fabric layer and pushing it out through the second fabric layer.

The proposed combination of yarns and total moisture regain of the fabric provides optimum comfort to the wearer by making sure that excess sweat does not accumulate next to skin while still provide moisture in the fabric that would help in cooling and breathability.

In an embodiment, the fabric is a weft or warp knitted fabric or a woven fabric.

In an embodiment, the moisture regain of the first fabric layer is in the range of 0.2% - 6% and the moisture regain of the second fabric layer is in the range of 4% - 16%, and the moisture regain gradient is greater than 3%.

In a further embodiment, the first yarn is selected from a group consisting of a nylon, a polyester, a polypropylene, an acrylic, cotton, wool, silk, regenerated cellulosic fibers and any blend combination thereof.

In an embodiment, the first fabric layer further comprises a third yarn joined together with the first yarn and the second fabric layer further comprises a fourth yarn joined together with the second yarn.

In a supplemental embodiment, the third yarn is a synthetic polymer.

In another embodiment, the first fabric layer is a composite blend of a synthetic polymer plaited with an elastane.

In an embodiment, the second yarn comprises a natural or a regenerated cellulosic fiber or a blend of natural or regenerated cellulosic fibers with synthetic fibers such as nylon, a polyester, a polypropylene, an acrylic.

In another embodiment, the second yarn is selected from the group consisting of a cotton, silk, wool, modal, micro-modal, rayon, lyocell, viscose, cupro, artificial silk, nylon, a polyester, a polypropylene, an acrylic and any combination thereof.

In a further embodiment, the fourth yarn is a synthetic polymer.

In an embodiment, the fourth yarn is an elastane.

In another embodiment, the second fabric layer is a composite blend of a natural fiber plaited with an elastane or a blend of natural fiber and synthetic fiber such as nylon, a polyester, a polypropylene, or an acrylic.

In an embodiment, the second yarn is a synthetic polymer.

In another embodiment, the second yarn is selected from a group consisting of a nylon, a polyester, a polypropylene, an acrylic or blended with cotton, silk, wool, modal, micro-modal, rayon, lyocell, viscose, cupro, artificial silk and a combination thereof.

In a further embodiment, the second fabric layer is pitched to increase its surface area.

In a supplemental embodiment, the fabric is knitted and further comprises a connecting yarn binding together the first and the second fabric layers.

In an embodiment, the connecting yarn is at least a single strand.

In an embodiment, the connecting yarn is an elastane.

In a further embodiment, the connecting yarn is a synthetic polymer.

In another embodiment, the connecting yarn is a natural fiber.

In an embodiment, the connecting yarn is a zig-zag structure between the first fabric layer and the second fabric layer. It is understood that the zig-zag structure means mainly a lapping back and forth between first and second layer fabrics in order to connect them.

In a supplemental embodiment, the fabric is knitted from a single jersey plaited construction, a double jersey plaited construction, a tricot or warp knit construction.

In an embodiment, at least one of the first yarn, the second yarn, the third yarn and the fourth yarn is produced by compact spinning.

In an embodiment, the first fabric layer and the second fabric layer are woven with a number of yarn cross overs desired.

In a further embodiment, the yarn cross over is of 3 up and 3 down, 3 up and one down, 3 up and 2 down, or 4 up and 1 down.

It is further provided an article of apparel comprising the fabric as defined herein.

### BRIEF DESCRIPTION OF THE DRAWINGS

Reference will now be made to the accompanying drawings.
Fig. 1 illustrates a schematic representation of a double jersey plaited construction fabric as encompassed herein in accordance to an embodiment.
Fig. 2 illustrates a schematic representation of a single jersey plaited construction fabric in accordance to another embodiment.
Fig. 3 illustrates a compact spinning technique used for the fabrication of the yarns as encompassed herein.
Fig. 4A illustrates the outer layer of a fabric in accordance to an embodiment.
Fig. 4B illustrates the inner layer of the fabric shown in Fig. 4A in accordance to an embodiment.
Fig. 5 illustrates a schematic representation of a double woven construction fabric as encompassed herein in accordance to an embodiment.
Fig 6 illustrates a schematic representation of a plaited tricot (warp) knitted construction fabric as encompassed herein in accordance to an embodiment.
Fig. 7 illustrates a schematic representation of a core bi-component yarn with an outer sheath yarn surrounding the core bi-component yarn.
Fig. 8A illustrates a schematic representation of a core bi-component yarn with an outer sheath yarn surrounding the core bi-component yarn.
Fig.8B illustrates a schematic representation of a core bi-component yarn with two outer sheath yarns surrounding the core bi-component yarn.
Fig. 9 illustrates a schematic representation of a plaited jersey knit construction fabric as encompassed herein in accordance to an embodiment.
Fig. 10 illustrates a schematic representation of a plaited twill knit construction fabric plaited jersey knit construction fabric as encompassed herein in accordance to an embodiment.
Fig. 11 illustrates a schematic representation of a circular knit double knit construction fabric as encompassed herein in accordance to an embodiment.
Fig. 12 illustrates a schematic representation of a warp knit construction fabric as encompassed herein in accordance to an embodiment.

### DETAILED DESCRIPTION

In accordance with the present disclosure, it is provided a knitted or woven fabric with moisture management function comprising a first fabric layer comprising a first yarn and forming a next to skin back fabric layer, the first fabric layer having a first moisture regain and being a semi-hydrophilic or hydrophobic layer and a second fabric layer comprising a second yarn forming a face fabric layer facing towards outside, the second fabric layer having a second moisture regain and being a hydrophilic layer. In case of a knitted fabric, it can further comprise a connecting yarn binding together the first fabric layer and the second fabric layer.

As described herein, the moisture from a wearer's skin is pushed through the first fabric layer and pulled out through the second fabric layer due to the presence of a moisture regain gradient between the first fabric layer and the second fabric layer of the knitted fabric.

In an embodiment, the moisture regain of the first fabric layer is in the range of 0.2% - 6% while the moisture regain of the second fabric layer is in a range of 4% - 16% and the moisture regain gradient between the two fabric layers is greater than 3%. For example, the moisture regain gradient between the two fabric layers is greater than 3%, such as e.g. between 3% - 15%.

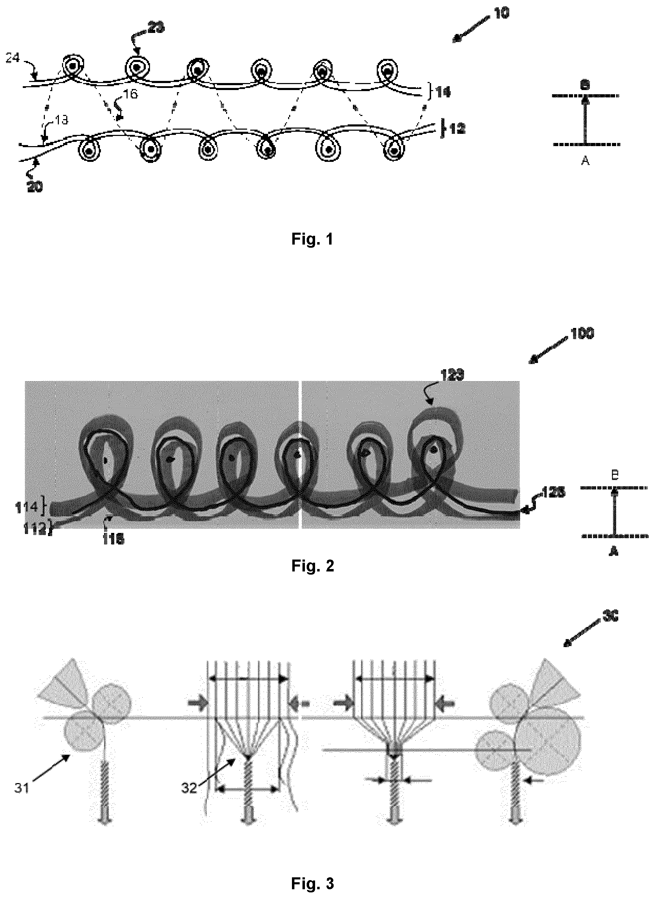

As seen in Fig. 1, the fabric 10 comprises a first layer 12 which is the layer next to the skin A (inner layer) and a second layer 14 which correspond to the layer of the fabric 10 facing the exterior B (outer layer) and away from the skin A. As illustrated in Fig. 1, in an embodiment, a connecting yarn 16 binds together the first fabric layer 12 and the second fabric layer 14 tightening the fabric 10 together. The moisture from a wearer's skin is pushed through the first fabric layer 12 towards the second fabric layer 14. The presence of a hydrophilic (moisture regain) gradient between the first fabric layer 12, being a semi-hydrophilic layer, and the second fabric layer 14, representing a hydrophilic layer, of the fabric 10 allows the moisture to be pushed as indicated from the direction of the arrow between region A of the skin towards exterior region B.

The first fabric layer 12 in an embodiment comprises a first yarn 18 and the second fabric layer 14 comprises a second yarn 23. In the illustrated embodiment of Fig. 1, the first fabric layer 12 further comprises a third yarn 20 knitted or woven together to form the next to skin A inner fabric layer 12, the first fabric layer 12 being a semi-hydrophilic or hydrophobic layer as mentioned. It is encompassed that the first yarn 18 and the third yarn 20 are a synthetic polymer, such as for example but not limited to, a polyester, a polypropylene, an acrylic, a polyacrylic or any combination thereof. As illustrated herein, the third yarn 20 is an elastane, resulting in a first fabric layer 12 being a composite blend of a synthetic polymer plaited with an elastane. In one embodiment, the first yarn 18 can be a composite of synthetic polymer and natural fiber such as for example, cotton, wool, silk or regenerated cellulosic fibers and can be configured as semi-hydrophilic with a first moisture regain. For example the first yarn 18 can be a blend of 70 - 95% synthetic polymer (e.g., polyester) and 5 - 30% natural fibers (e.g., cotton).

The second fabric layer 14 further comprises a fourth yarn 24 knitted or woven together to form a face (outer) fabric layer 14 facing towards outside B, the second fabric layer 14 being a hydrophilic layer. As encompassed, the second yarn 23 comprises a natural fiber, such as for example and not limited to, a cotton, silk, wool, modal, micro-modal, rayon, lyocell, viscose or a combination thereof. The second yarn 23 can alternatively be a composite blend of a modal and a cotton. Alternatively, the second yarn can also be a synthetic polymer such as for example a nylon, a polyester, a polypropylene, an acrylic, a polyacrylic or a combination thereof. The fourth yarn 24 can be a synthetic polymer, such as elastane. As a further embodiment, it is encompassed a second fabric layer 14 comprising a composite blend of a natural fiber plaited with an elastane. In one embodiment, the second yarn 23 is a composite blend of natural or regenerated cellulosic fiber and synthetic fiber such as nylon, a polyester, a polypropylene, an acrylic. One means to increase the hydrophilic nature of the second layer 14 is to increase its surface area. Accordingly, it is encompassed that the second fabric layer 14 can be pitched to increase its surface area.

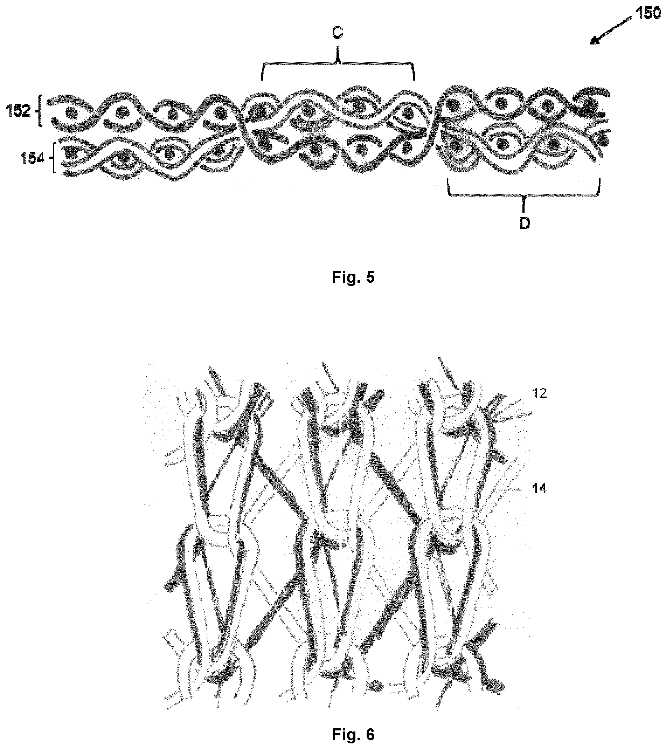

The connecting yarn 16 binding together the first fabric layer 12 and the second fabric layer 14 is at least a single strand. As encompassed herein, the connecting yarn 16 is an elastane. It is also encompassed that the connecting yarn 16 is a synthetic polymer such as for example a nylon, a polyester, a polypropylene, an acrylic, a polyacrylic or a combination thereof. Alternatively, the connecting yarn 16 as described herein can comprise preferably a natural fiber such as for example a cotton, silk, wool, modal, micro-modal, rayon, lyocell, viscose or a combination thereof. The connecting yarn is preferably a zig-zag structure (an overlap) between the first fabric layer 12 and the second fabric layer 14. It is encompassed that the zig-zag structure consist of a lapping back and forth between first and second layer fabrics in order to connect them (Fig. 6). The connecting yarn 16 can be single strand or multiple strands. Each strand of the plurality of strands of the connecting yarn 16 can have independent zig-zag (underlap and overlap) structure.

It is thus described a fabric construction comprising an hydrophilic side and a semi hydrophilic or hydrophobic side allowing maximum moisture control. The fabric describe herein has the characteristic to push the moisture by a hydrophilic gradient using semi-hydrophilic and fully-hydrophilic layers next to each other. The combination of potentially 4 different types of fibers and the semi-hydrophilic or hydrophobic and fully-hydrophilic surfaces next to each other allows for efficient moisture management and quick drying.

As described herein, in some embodiments, the described fabric is made with a knitting construction which can be a weft knitted or warp knitted structure. For example, the fabric can be a single jersey plaited construction (see Fig. 2) or a double jersey plaited construction for example (see Fig. 1) or Tricot warp knit plaited structure. As illustrated in Fig. 2, the fabric 100 has a single jersey plaited construction with a first layer 112 that comprises a first yarn 118 having the first moisture regain and a second layer 114 that comprises a second yarn 123 with the second moisture regain. The first moisture regain is lower than the second moisture regain providing a hydrophilic gradient between the first fabric layer 112 and the second fabric layer 114 of the fabric 100 thus pushing the moisture through the first fabric layer 112 and out through the second fabric layer 114. The fabric 100 further comprising a plaited yarn 125. The plaited yarn 125 can be elastane to increase the elasticity of the fabric 100.

In an embodiment, the moisture regain of the first fabric layer is in the range of 0.2% - 6% and the moisture regain of the second fabric layer is in the range of 4% - 16% and the moisture regain gradient between the two fabric layers is greater than 3%.

In an embodiment, at least one of the first, second, third or fourth yarn are fabricated using a compact spinning technique to spin the cotton/micromodal yarn for example that helps reducing pilling and better handfeel.

As seen in Fig. 3, in traditional spinning machines, such as ring spinner 31, the fiber stream is twisted without first being brought close together by compressing it (compacting) and the resulting yarn may pill or feel rough due to the broad twisting triangle 32 formed before the fibers are twisted. Compact spinning 30 involves narrowing and decreasing the width of the band of fibers (b_{comp}) so that it is much narrower than the width of the fibers band (b_{ring}) in the ring spinning 31 (see Fig. 3). Such compacted fibers band is then twisted into a yarn, and the x twisting triangle is eliminated. Compacting the fiber stream first causes the fiber stream in the form of the flat band of fibers to be condensed into a compact fiber stream with increased frictional contact points between the fibers. Compact spinning allows to produce compact yarns. Thus, compact spinning is a process where fiber strand drawn by drafting system is condensed before twisting it.

In some embodiment, at least one of the first, second, third or fourth yarn are fabricated using a ring spinning technique, such as Sirospun^{™}, core spun, compact spun where one yarn can be a natural fiber and the other yarn can be a synthetic fiber. Any other spinning technique (e.g. air jet spinning, ring spinning, mule spinning) can be used.

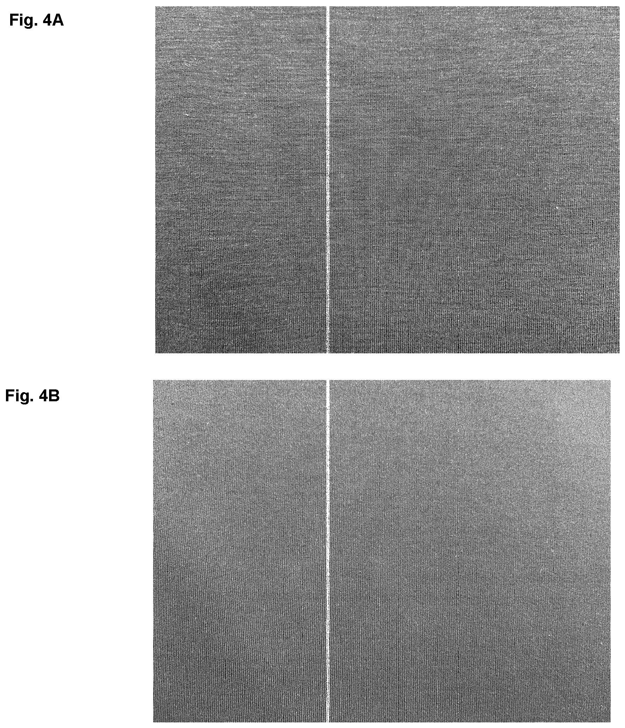

Fig. 4 provides a picture of a fabric comprising 26% cotton and 26% modal forming the outer layer with higher moisture regain fibers in A), and 25% elastane and 23% nylon forming an inner layer with lower moisture regain allowing and moisture management as described herein.

Fig. 5 illustrates an example of fabric construction that is double weave 150. The first 152 and the second layers 154 are woven in order to keep one fabric to one side in a way that the number of yarn cross overs is reduced. For example, in the illustrated example of fabric construction in Fig. 5, the cross over is 3 up C and 3 down D but it can be a sequence of 3 up and one down, 3 up and 2 down, or 4 up and 1 down etc.

According to the present invention, the fabric with moisture management function described herein includes at least one yarn formed by a combination of a core bi-component yarn and at least one outer sheath yarn surrounding the core bi-component yarn. For example, as shown in Fig. 1, fabric 10 comprises first layer 12 (inner layer) which is the layer next to the skin A and a second layer 14 (outer layer) which corresponds to the layer of fabric 10 facing the exterior B and away from the skin A. In another example, as shown in Fig. 2, fabric 100 comprises first layer 112 (inner layer) which is the layer next to the skin A and second layer 114 (outer layer) which corresponds to the layer of fabric 100 facing the exterior B and away from the skin A.

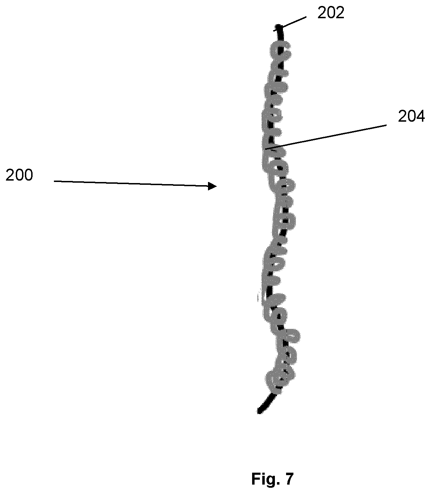

In one embodiment, outer layer 14 of fabric 10 and/or outer layer 114 of fabric 100 includes at least one yarn formed by a combination of a core bi-component yarn and at least one outer sheath yarn surrounding the core bi-component yarn. Referring now to FIG. 7, an example embodiment of a combination yarn 200 is shown. In this embodiment, combination yarn 200 includes a core bicomponent yarn 202 that is surrounded by an outer sheath yarn 204 that extends along a length of core bi-component yarn 202.

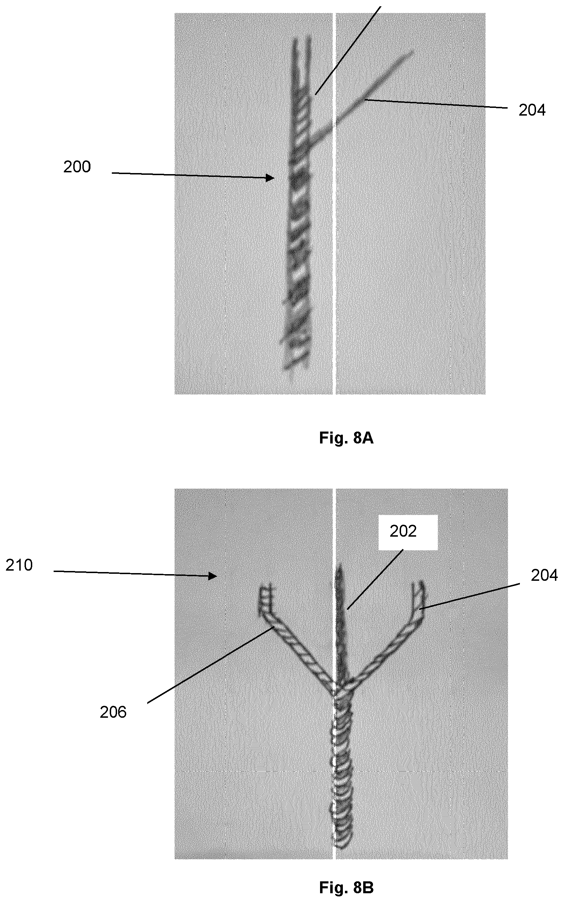

In some embodiments, the at least one outer sheath yarn may be spun, wrapped, or twisted around the core bi-component yarn and extend along a length of the core bi-component yarn. Referring now to Fig. 8A, an example embodiment of combination yarn 200 formed by core bi-component yarn 202 and outer sheath yarn 204 surrounding core bi-component yarn 202 is shown. In one embodiment, outer sheath yarn 204 may be spun, wrapped, or twisted around core bi-component yarn 202 using any one of a single or double spinning process or a vortex spinning process to produce combination yarn 200.

In an example embodiment, bi-component yarn 202 may be formed by a synthetic material that includes acrylic, nylon, polyester, polypropylene, thermoplastic polyether ester elastomer (TPEE), thermoplastic polyurethane (TPU), and/or any blend combination thereof, and outer sheath yarn 204 may be formed by a natural staple or a combination of two or more natural staples. In embodiments, the outer sheath yarn 204 can comprise a synthetic filament combined with the natural staple. For example, outer sheath yarn 204 may comprise a similar synthetic material as bi-component yarn 202, including acrylic, nylon, polyester, polypropylene, thermoplastic polyether ester elastomer (TPEE), thermoplastic polyurethane (TPU), and/or any blend combination thereof. Natural staple material in outer sheath yarn 204 may include cotton, modal, acetate, silk, wool, lyocell, protein fibers, regenerated cellulosic fibers, and/or any blend combination thereof.

In another embodiment, a combination yarn 210 may be made from core bi-component yarn 202 that has two outer sheath yarns surrounding core bi-component yarn 202. Referring now to Fig. 8B, in this embodiment, combination yarn 210 has first outer sheath yarn 204 spun, wrapped, or twisted along a length of core bi-component yarn 202 and also a second outer sheath yarn 206 that is spun, wrapped, or twisted to surround core bi-component yarn 202 along a length of core bi-component yarn 202. In some cases, first outer sheath yarn 204 and second outer sheath yarn 206 may be made of the same materials. In other cases, first outer sheath yarn 204 and second outer sheath yarn 206 may be made from different materials, including different blends or combinations of similar materials.

For example, in one embodiment, both first outer sheath yarn 204 and second outer sheath yarn 206 may be made of a natural material, combination of natural materials or a combination of a natural and synthetic materials. In another embodiment, one of first outer sheath yarn 204 or second outer sheath yarn 206 may be made from a synthetic material that includes acrylic, nylon, polyester, polypropylene, thermoplastic polyether ester elastomer (TPEE), thermoplastic polyurethane (TPU), and/or any blend combination thereof, and the other may be made from a natural staple material that includes cotton, modal, acetate, silk, wool, lyocell, protein fibers, regenerated cellulosic fibers, and/or any blend combination thereof. In still another embodiment, both first outer sheath yarn 204 and second outer sheath yarn 206 may be made of a natural staple material.

According to the invention, combination yarn 200 including core-bi-component yarn 202 and one outer sheath yarn 204 and/or combination yarn 210 including core-bi-component yarn 202 and two outer sheath yarns (e.g., first outer sheath yarn 204 and second outer sheath yarn 206) are incorporated into a face layer or outer layer of a fabric. For example, outer layer 14 (second layer) of fabric 10 and/or outer layer 114 (second layer) of fabric 100 includes at least one combination yarn 200 and/or combination yarn 210 made of core-bi-component yarn 202 surrounded by first outer sheath yarn 204 and/or second outer sheath yarn 206 along a length of core-bi-component yarn 202.

In some cases, combination yarn 200 or combination yarn 210 may form an entirety of outer layer 14 and/or outer layer 114. In other cases, combination yarn 200 or combination yarn 210 may be combined with at least one additional yarn forming outer layer 14 and/or outer layer 114. For example, in one embodiment, combination yarn 200 or combination yarn 210 may be joined with second yarn 23 forming outer layer 14 of fabric 10 and/or may be joined with second yarn 123 forming outer layer 114 of fabric 100. In some cases, combination yarn 200 or combination yarn 210 may be plaited with one of second yarn 23 or second yarn 123. In some embodiments, combination yarn 200 or combination yarn 210 may be plaited with one of fourth yarn 24, the fourth yarn 24 being an elastane.

In some embodiments, fabric 10 and/or fabric 100 may have a wash or finish applied to the completed fabric and/or to the individual yarns forming fabric 10 and/or fabric 100. In an example embodiment, fabric 10 and/or fabric 100 may be dyed with indigo. In another embodiment, outer layer 14 of fabric 10 and/or outer layer 114 of fabric 100 may be dyed with indigo. In another embodiment, combination yarn 200 and/or combination yarn 210 included in fabric 10 or fabric 100 may be dyed with indigo. In still another embodiment, at least one outer sheath yarn (e.g., one or both of first outer sheath yarn 204 and second outer sheath yarn 206) may be pre-dyed with indigo before being spun, wrapped, or twisted around core bi-component yarn 202.

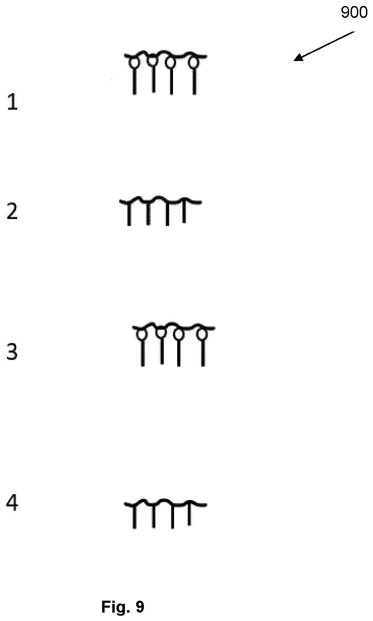

As described above, in various embodiments, fabrics with moisture management function described herein may be knit or woven, including fabric 10 and/or fabric 100. In one embodiment, a plaited jersey knit construction fabric with moisture management function may be formed according to the knit diagram shown in Figs. 9. For example, Fig. 9 shows an example embodiment of a plaited jersey knit construction 900 that uses a 100% modal or modal cotton blended (50%+50%) yarn with an elastane, 32/2 micro modal cotton (60%+40%) yarn with an elastane, or a core spun 30D/32F bicomponent polyester yarn for feeds 1 and 3 and a 80D/68F Nylon 6 yarn for feeds 2 and 4.

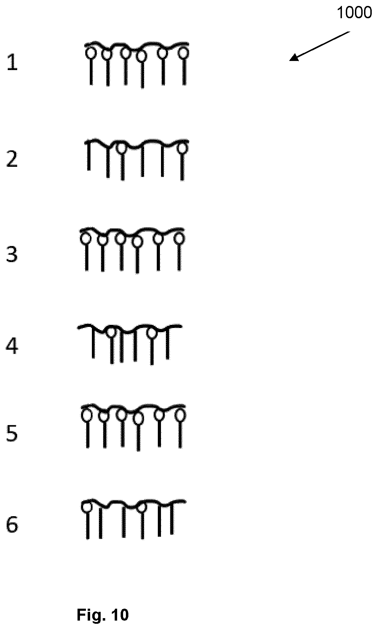

In another embodiment, a plaited twill knit construction fabric with moisture management function may be formed according to the knit diagram shown in Fig. 10. For example, Fig. 10 shows an example embodiment of a plaited twill knit construction 1000 that uses a 80D/68F Nylon 6 yarn with an elastane for feeds 1, 3, and 5 and a 100% modal or modal cotton blended (50%+50%) yarn with an elastane, 32/2 micro modal cotton (60%+40%) yarn with an elastane, or a core spun 30D/32F bicomponent polyester yarn for feeds 2, 4, and 6. As shown in Fig. 10, the technical back of the plaited twill knit construction 1000 is used as the face of the fabric.

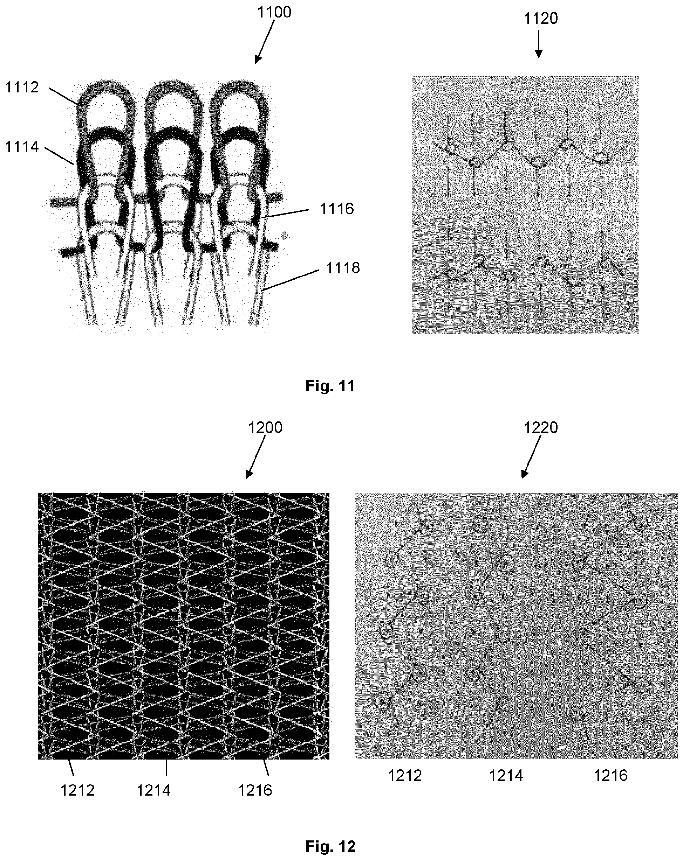

Referring now to Fig. 11, a circular knit double knit construction fabric 1100 is shown. In an example embodiment, circular double knit fabric 1100 may be formed from four yarns, including a first yarn 1112, a second yarn 1114, a third yarn 1116, and a fourth yarn 1118. At least one of first yarn 1112, second yarn 1114, third yarn 1116, and fourth yarn 1118 may include a combination yarn, as described above. Additionally, in some embodiments, one of first yarn 1112, second yarn 1114, third yarn 1116, and fourth yarn 1118 may be an elastane. Knit diagram 1120 illustrates an example embodiment of a schematic for forming circular double knit fabric 1100 using a circular knitting machine.

In different embodiments, circular double knit fabric 1100 may be knitted in any gauge or machine diameter with jacquard or engineer designs. Multiple yarn options may be used in combination on technical face or back of circular double knit fabric 1100. Yarns (e.g., first yarn 1112, second yarn 1114, third yarn 1116, and fourth yarn 1118 ) may be of counts 10's to 120's or higher and denier may be 10D to 300D in any ply and combinations of spun, filaments or monofilament.

Fig. 12 illustrates a schematic representation of a warp knit construction fabric 1200. In an example embodiment, warp knit fabric 1200 may be formed from three yarns, including a first yarn 1212, a second yarn 1214, and a third yarn 1216. Knit diagram 1212 illustrates an example embodiment of a schematic for forming warp knit fabric 1200 using a warp knitting machine. In this embodiment, warp knit fabric 1200 is shown in reference to knit diagram 1220 for a 3 bar warp knit machine. In other embodiments, the warp knitting machine may be a 2 bar, 3 bar, or 4 bar warp knitting machine and may include tricot, raschel, or jacquard knitting machines. Multiple yarn options may be used randomly in any of the bars in combinations. Yarns (e.g., first yarn 1212, second yarn 1214, and third yarn 1216 ) may be of counts 10's to 120's or higher and denier may be 10D to 300D in any ply and combinations of spun, filaments or monofilament.

As encompassed herein, the knitted fabric described herein with moisture management can be any type of articles of apparel including shirts, headwear, coats, jackets, pants, underwear, gloves, socks, and footwear.

## Claims

1. A fabric (10) with moisture management function comprising:
an inner layer (12) intended to be the layer next to the skin (A) of a wearer of the fabric (10), the inner layer (12) comprising a first yarn (18) forming the inner layer, the inner layer (12) being semi-hydrophilic or hydrophobic with a first moisture regain;
an outer layer (14) intended to face the exterior so that the inner layer (12) is arranged between the outer layer (14) and the skin (A) of a wearer of the fabric, the outer layer (14) comprising a second yarn (23) forming the outer layer, the outer layer (14) being hydrophilic with a second moisture regain;
the second moisture regain of the outer layer (14) is greater than the first moisture regain of the inner layer (12) so as to act to pull moisture through the inner layer (12) and push the moisture out through the outer layer (14); and
wherein the second yarn (23) is a combination of a core bi-component yarn (202) and at least one outer sheath yarn (204) surrounding the core bi-component yarn (202).

2. The fabric (10) according to claim 1, wherein the at least one outer sheath yarn (204) is spun, wrapped, or twisted around the core bi-component yarn (202) and extends along a length of the core bi-component yarn (202).

3. The fabric (10) according to claim 1, wherein the core bi-component yarn (202) comprises a synthetic filament and the at least one outer sheath yarn (204) comprises a natural staple yarn.

4. The fabric (10) according to claim 3, wherein the synthetic filament is made of a material that includes acrylic, nylon, polyester, polypropylene, thermoplastic polyether ester elastomer (TPEE), thermoplastic polyurethane (TPU), and/or any blend combination thereof; and
wherein the natural staple yarn is made of a material that includes cotton, modal, acetate, silk, wool, lyocell, protein fibers, regenerated cellulosic fibers, and/or any blend combination thereof.

5. The fabric (10) according to claim 1, wherein the at least one outer sheath yarn (204) comprises a synthetic filament or staple.

6. The fabric (10) according to claim 5, wherein the synthetic filament is made of a material that includes acrylic, nylon, polyester, polypropylene, thermoplastic polyether ester elastomer (TPEE), thermoplastic polyurethane (TPU), and/or any blend combination thereof.

7. The fabric (10) according to claim 1, wherein the at least one outer sheath yarn (204) comprises two natural staple yarns.

8. The fabric (10) according to claim 1, wherein the fabric (10) is dyed with indigo.

9. The fabric (10) according to claim 1, wherein the second yarn (23) is dyed with indigo.

10. The fabric according to claim 1, wherein the at least one outer sheath yarn (204) is pre-dyed with indigo.

11. The fabric (10) according to claim 1, wherein the fabric (10) is a weft or warp knitted fabric or a woven fabric.

12. The fabric (10) according to claim 11, wherein the fabric (10) is a weft or warp knitted fabric, and is knitted from a single jersey plaited construction, a double jersey plaited construction, a tricot knit construction, or a warp knit construction.

13. The fabric (10) according to claim 9, wherein the fabric (10) is a knitted fabric and further comprises a connecting yarn (16) binding together the inner fabric layer (12) and the outer fabric layer (14); optionally wherein the connecting yarn (16) is an elastane yarn .

14. The fabric (10) according to claim 1, wherein the inner layer (12) further comprises a third yarn (20) knitted or woven together with the first yarn (18) to form the inner layer, and the outer layer (14) further comprises a fourth yarn (24) knitted or woven together with the second yarn (23) to form the outer layer (14); optionally wherein the third yarn (20) is an elastane yarn, or wherein the fourth yarn (24) is an elastane yarn.

15. An article of apparel comprising a fabric (10) with moisture management function, wherein the fabric (10) is a fabric (10) according to claim 1.

## Patentansprüche

1. Textil (10), welches eine Feuchtigkeitsregulierungsfunktion aufweist, umfassend:
eine Innenschicht (12), welche die Schicht neben der Haut (A) eines Trägers des Textils (10) sein soll, wobei die Innenschicht (12) ein erstes Garn (18) umfasst, welches die Innenschicht bildet, wobei die Innenschicht (12) semihydrophil oder hydrophob mit einer ersten Feuchtigkeitsrückgewinnung ist;
eine Außenschicht (14), welche dem Äußeren zugewandt sein soll, so dass die Innenschicht (12) zwischen der Außenschicht (14) und der Haut (A) eines Trägers des Textils angeordnet ist, wobei die Außenschicht (14) ein zweites Garn (23) umfasst, welches die Außenschicht bildet, wobei die Außenschicht (14) hydrophil ist und eine zweite Feuchtigkeitsrückgewinnung aufweist;
die zweite Feuchtigkeitsrückgewinnung der Außenschicht (14) größer ist als die erste Feuchtigkeitsrückgewinnung der Innenschicht (12), um zu bewirken, dass Feuchtigkeit durch die Innenschicht (12) gezogen wird und die Feuchtigkeit durch die Außenschicht (14) nach außen gedrückt wird; und
wobei das zweite Garn (23) eine Kombination aus einem Kern-Zweikomponentengarn (202) und mindestens einem Außenmantelgarn (204) ist, welche das Kern-Zweikomponentengarn (202) umgibt.

2. Textil (10) gemäß Anspruch 1, wobei das mindestens eine Außenmantelgarn (204) um das Kern-Zweikomponentengarn (202) gesponnen, gewickelt oder gedreht ist und sich entlang einer Länge des Kern-Zweikomponentengarns (202) erstreckt.

3. Textil (10) gemäß Anspruch 1, wobei das Kern-Zweikomponentengarn (202) ein synthetisches Filament umfasst und das mindestens eine Außenmantelgarn (204) ein natürliches Stapelfasergarn umfasst.

4. Textil (10) gemäß Anspruch 3, wobei das synthetische Filament aus einem Material hergestellt ist, welches Acryl, Nylon, Polyester, Polypropylen, thermoplastisches Polyetheresterelastomer (TPEE), thermoplastisches Polyurethan (TPU) und/oder eine Mischkombination davon umfasst; und
wobei das natürliche Stapelfasergarn aus einem Material hergestellt ist, welches Baumwolle, Modal, Acetat, Seide, Wolle, Lyocell, Proteinfasern, regenerierte Zellulosefasern und/oder eine Mischungskombination davon umfasst.

5. Textil (10) gemäß Anspruch 1, wobei das mindestens eine Außenmantelgarn (204) ein synthetisches Filament oder Stapelfaser umfasst.

6. Textil (10) gemäß Anspruch 5, wobei das synthetische Filament aus einem Material hergestellt ist, welches Acryl, Nylon, Polyester, Polypropylen, thermoplastisches Polyetherester-Elastomer (TPEE), thermoplastisches Polyurethan (TPU) und/oder eine Mischungskombination davon umfasst.

7. Textil (10) gemäß Anspruch 1, wobei das mindestens eine Außenmantelgarn (204) zwei natürliche Stapelfasergarne umfasst.

8. Textil (10) gemäß Anspruch 1, wobei das Textil (10) mit Indigo gefärbt ist.

9. Textil (10) gemäß Anspruch 1, wobei das zweite Garn (23) mit Indigo gefärbt ist.

10. Textil gemäß Anspruch 1, wobei das mindestens eine Außenmantelgarn (204) mit Indigo vorgefärbt ist.

11. Textil (10) gemäß Anspruch 1, wobei das Textil (10) eine Schuss- oder Kettenwirkware oder ein Gewebe ist.

12. Textil (10) gemäß Anspruch 11, wobei das Textil (10) eine Schuss- oder Kettenwirkware ist und aus einer Single-Jersey-Flechtkonstruktion, einer Double-Jersey-Flechtkonstruktion, einer Trikotstrickkonstruktion oder einer Kettenstrickkonstruktion gestrickt ist.

13. Textil (10) gemäß Anspruch 9, wobei das Textil (10) ein Gestrick ist und ferner ein Verbindungsgarn (16) umfasst, welches die innere Textilschicht (12) und die äußere Textilschicht (14) miteinander verknüpft; wobei gegebenenfalls das Verbindungsgarn (16) ein Elastangarn ist.

14. Textil (10) gemäß Anspruch 1, wobei die Innenschicht (12) ferner ein drittes Garn (20) umfasst, welches mit dem ersten Garn (18) verstrickt oder verwoben ist, um die Innenschicht zu bilden, und die Außenschicht (14) ferner ein viertes Garn (24) umfasst, welches mit dem zweiten Garn (23) verstrickt oder verwoben ist, um die Außenschicht (14) zu bilden; wobei gegebenenfalls das dritte Garn (20) ein Elastangarn ist oder das vierte Garn (24) ein Elastangarn ist.

15. Bekleidungsartikel, umfassend ein Textil (10), welches eine Feuchtigkeitsregulierungsfunktion aufweist, wobei das Textil (10) ein Textil (10) gemäß Anspruch 1 ist.

## Revendications

1. Tissu (10) doté d'une fonction de gestion de l'humidité comprenant :
une couche interne (12) destinée à être la couche à côté de la peau (A) d'un porteur du tissu (10), la couche interne (12) comprenant un premier fil (18) formant la couche interne, la couche interne (12) étant semi-hydrophile ou hydrophobe avec un premier taux de reprise d'humidité ;
une couche externe (14) destinée à être dirigée vers l'extérieur de sorte que la couche interne (12) soit agencée entre la couche externe (14) et la peau (A) d'un porteur du tissu, la couche externe (14) comprenant un deuxième fil (23) formant la couche externe, la couche externe (14) étant hydrophile avec un second taux de reprise d'humidité ;
le second taux de reprise d'humidité de la couche externe (14) est supérieur au premier taux de reprise d'humidité de la couche interne (12) de manière à agir pour tirer l'humidité à travers la couche interne (12) et pousser l'humidité à l'extérieur à travers la couche externe (14) ; et
dans lequel le deuxième fil (23) est une combinaison d'un fil à deux composants d'âme (202) et d'au moins un fil de gaine externe (204) entourant le fil à deux composants d'âme (202).

2. Tissu (10) selon la revendication 1, dans lequel l'au moins un fil de gaine externe (204) est filé, enroulé ou torsadé autour du fil à deux composants d'âme (202) et s'étend le long d'une longueur du fil à deux composants d'âme (202) .

3. Tissu (10) selon la revendication 1, dans lequel le fil à deux composants d'âme (202) comprend un filament synthétique et l'au moins un fil de gaine externe (204) comprend un fil de fibres coupées naturelles.

4. Tissu (10) selon la revendication 3, dans lequel le filament synthétique est composé d'un matériau qui inclut de l'acrylique, du nylon, du polyester, du polypropylène, un élastomère de polyétherester thermoplastique (TPEE), du polyuréthane thermoplastique (TPU) et/ou une quelconque combinaison de mélange de ceux-ci ; et
dans lequel le fil de fibres coupées naturelles est composé d'un matériau qui inclut du coton, du modal, de l'acétate, de la soie, de la laine, du lyocell, des fibres protéiques, des fibres cellulosiques régénérées et/ou une quelconque combinaison de mélange de ceux-ci.

5. Tissu (10) selon la revendication 1, dans lequel l'au moins un fil de gaine externe (204) comprend un filament ou une fibre coupée synthétique.

6. Tissu (10) selon la revendication 5, dans lequel le filament synthétique est composé d'un matériau qui inclut de l'acrylique, du nylon, du polyester, du polypropylène, un élastomère de polyétherester thermoplastique (TPEE), du polyuréthane thermoplastique (TPU) et/ou une quelconque combinaison de mélange de ceux-ci.

7. Tissu (10) selon la revendication 1, dans lequel l'au moins un fil de gaine externe (204) comprend deux fils de fibres coupées naturelles.

8. Tissu (10) selon la revendication 1, dans lequel le tissu (10) est teint avec de l'indigo.

9. Tissu (10) selon la revendication 1, dans lequel le deuxième fil (23) est teint avec de l'indigo.

10. Tissu selon la revendication 1, dans lequel l'au moins un fil de gaine externe (204) est pré-teint avec de l'indigo.

11. Tissu (10) selon la revendication 1, dans lequel le tissu (10) est un tissu tricoté trame ou chaîne ou un tissu tissé.

12. Tissu (10) selon la revendication 11, dans lequel le tissu (10) est un tissu tricoté trame ou chaîne et est tricoté à partir d'une unique structure tressée de jersey
, d'une double structure tressée de jersey, d'une structure en tricot tricotée ou d'une structure en tricot chaîne.

13. Tissu (10) selon la revendication 9, dans lequel le tissu (10) est un tissu tricoté et comprend en outre un fil de liaison (16) liant ensemble la couche de tissu interne (12) et la couche de tissu externe (14) ; éventuellement dans lequel le fil de liaison (16) est un fil d'élasthanne.

14. Tissu (10) selon la revendication 1, dans lequel la couche interne (12) comprend en outre un troisième fil (20) tricoté ou tissé conjointement avec le premier fil (18) pour former la couche interne, et la couche externe (14) comprend en outre un quatrième fil (24) tricoté ou tissé conjointement avec le deuxième fil (23) pour former la couche externe (14) ; facultativement dans lequel le troisième fil (20) est un fil d'élasthanne ou dans lequel le quatrième fil (24) est un fil d'élasthanne.

15. Article d'habillement comprenant un tissu (10) doté d'une fonction de gestion de l'humidité, dans lequel le tissu (10) est un tissu (10) selon la revendication 1.
